Europäisches Patentamt

**European Patent Office**

**Office européen des brevets**

(19)

(11) Numéro de publication: **0 265 318 B1**

# (12) FASCICULE DE BREVET EUROPEEN

(45) Date de publication de fascicule du brevet: **17.06.92**  (51) Int. Cl.5: **B60B** **19/00**, B60C 7/14

(21) Numéro de dépôt: **87402236.1**

(22) Date de dépôt: **07.10.87**

(54) **Procédé de fabrication d'une roue déformable non-pneumatique.**

(30) Priorité: **09.10.86 FR 8614092**

(43) Date de publication de la demande:
**27.04.88 Bulletin  88/17**

(45) Mention de la délivrance du brevet:
**17.06.92 Bulletin  92/25**

(84) Etats contractants désignés:
**AT BE CH DE ES GB IT LI NL SE**

(56) Documents cités:
EP-A- 0 190 968     FR-A- 365 610
FR-A- 541 987       FR-A- 2 339 505
GB-A- 15 817        US-A- 2 431 897
US-A- 2 432 672     US-A- 3 010 504

(73) Titulaire: **Le Feron de Longcamp, Guy**
**9, Rue Massenet**
**F-75116 Paris(FR)**

(72) Inventeur: **Le Feron de Longcamp, Guy**
**9, Rue Massenet**
**F-75116 Paris(FR)**

Rank Xerox (UK) Business Services

EP 0 265 318 B1

## Description

La présente invention est relative à un procédé de fabrication d'une roue déformable non-pneumatique du type comprenant un moyeu rigide, une bande de roulement déformable dans le sens axial et de longueur périphérique sensiblement constante et des moyens de liaison reliant ce moyeu à cette bande constitués d'au moins un câble, ce procédé comportant la confection d'un sous-ensemble comprenant les moyens de liaison et la bande de roulement et l'assemblage de ce sous-ensemble avec le moyeu.

Une roue du type qu'on vient de mentionner est décrite dans la demande EP-A-0023460 au nom du demandeur.

Ce document ne décrit pas de façon précise un procédé de fabrication, mais il ressort de la description des exemples que ceux-ci sont obtenus par des techniques voisines de celles qui sont utilisées pour la confection des pneumatiques, c'est à dire en disposant d'une part la bande de roulement, d'autre part les "flancs" constituant les moyens de liaison, puis en reliant la bande de roulement aux flancs, par exemple par enrobage dans du caoutchouc qui est ensuite vulcanisé. Les flancs, comme ceux des pneumatiques, comportent un "talon" de longueur périphérique constante, destiné à coopérer avec une rainure du moyeu pour l'assemblage de la roue complète.

Cette manière de faire exige des appareillages compliqués, et notamment des pièces de maintien intérieur dont le diamètre doit pouvoir être égal au diamètre intérieur de la bande de roulement et ensuite devenir inférieur à celui du talon pour permettre leur extraction

Ces appareillages sont conçus pour une roue de dimensions et caractéristiques bien déterminées, ils sont difficilement adaptables à la fabrication d'une autre roue, si bien que le mode de fabrication décrit dans ce brevet est mal adapté à des roues fabriquées en petites séries.

La présente invention a pour but de fournir un procédé d'obtention d'une roue du type indiquée plus haut, qui soit peu coûteuse et néanmoins facilement adaptable à des roues de caractéristiques différentes, notamment en ci qui concerne les pressions exercées sur le sol, la valeur maximale de celles-ci, l'adhérence au sol, etc..

Ce résultat, et d'autres sont atteints selon l'invention, en prévoyant que le procédé de fabrication de la roue comprend les étapes suivantes:

a) confection d'un élément structural constitué du ou des dits câbles constituant les moyens de liaison et d'une bande flexible dans le sens radial destinée à faire partie de la bande de roulement

b) confection d'une bande de surface, destinée à faire partie de la bande de roulement, cette bande de surface étant flexible dans le sens radial et comportant une face extérieure conçue pour venir en contact avec le sol, ladite bande flexible et/ou ladite bande de surface étant de longueur sensiblement constante

c) assemblage de l'élément structural avec la bande de surface pour constituer la bande de roulement

d) assemblage du moyeu avec ledit câble ou les dits câbles, à l'aide de moyens d'accrochage portés par le moyeu.

Ce procédé présente pour premier avantage la suppression du talon, et par conséquent des complications dûes à la difficulté d'extraction d'une pièce de maintien interne.

Suivant une modalité préférée, on assemble l'élément structural avec la bande de surface par collage et/ou vulcanisation, avec serrage entre deux surfaces concentriques et sensiblement cylindriques.

Suivant un mode d'exécution avantageux, on confectionne l'élément structural sous une forme sensiblement cylindrique.

Suivant un autre mode d'exécution, on confectionne l'élément structural et/ou la bande de surface sous forme d'un élément plan dont on relie ensuite les deux extrémités. Ce second mode exige un appareillage plus simple encore que le premier, mais un soin plus particulier est nécessaire pour la jonction des extrémités de la bande. On notera que le même appareillage peut servir pour confectionner des bandes de longueur différente, donc des roues de diamètre différent, ce qui est avantageux pour des petites séries. L'assemblage avec serrage entre surfaces cylindriques peut servir à relâcher les tensions dûes au passage de la forme plan à la forme circulaire.

Suivant une réalisation pratique intéressante, on confectionne la bande flexible sous forme d'une série de barrettes parallèles à l'axe de la roue, le ou les câbles contournant l'extrémité de chacune, ou d'une partie d'entre elles, ces barrettes étant reliées entre elles par enrobage dans du caoutchouc.

Suivant un premier mode de réalisation des moyens d'accrochage des câbles avec le moyeu, ces moyens sont constitués par une série de saillies axiales, de préférence en forme de crochets, régulièrement réparties sur la périphérie du moyeu, et autour desquelles on veut faire passer les câbles, avantageusement sous forme de boucles.

Suivant un second mode de réalisation des moyens d'accrochage des câbles avec le moyeu, ceux-ci sont constitués par au moins une gorge périphérique prévue dans le moyeu, et dans laquelle on veut faire passer les câbles.

Ces deux modes de réalisation ne sont pas équivalents: le premier permet de disposer les câbles de façon plus homogène dans une même surface de flanc, le second est de réalisation plus simple et conduit à une moindre fatigue des câbles sous l'effet de fortes tensions du fait d'un arrimage tangentiel au moyeu.

Par ailleurs le premier modes de réalisation permet d'envisager une façon particulièrement simple de construire une roue à rigidité variable. Il suffit en effet de placer les saillies d'un même côté alternativement sur deux supports, tels que des disques coaxiaux, pouvant tourner autour de l'axe l'un par rapport à l'autre. Une rotation relative de ces supports fait varier l'angle des câbles avec la périphérie du moyeu, et par conséquent la dimension radiale des flancs au repos.

L'invention va maintenant être exposée de façon plus détaillée à l'aide d exemples pratiques, illustrés avec les dessins parmi lesquels:

Fig 1 est une vue perspective d'ensemble de la roue assemblée

Fig. 2,3 et 4 sont des vues perspectives du moyeu, de l'élément structural et de la bande de surface

Fig. 5 est une coupe axiale partielle de la roue et

Fig. 6 est une coupe radiale, agrandie, selon la ligne VI VI de la fig.5

Fig. 7 est une vue partielle en perspective illustrant un autre mode de réalisation de l'invention.

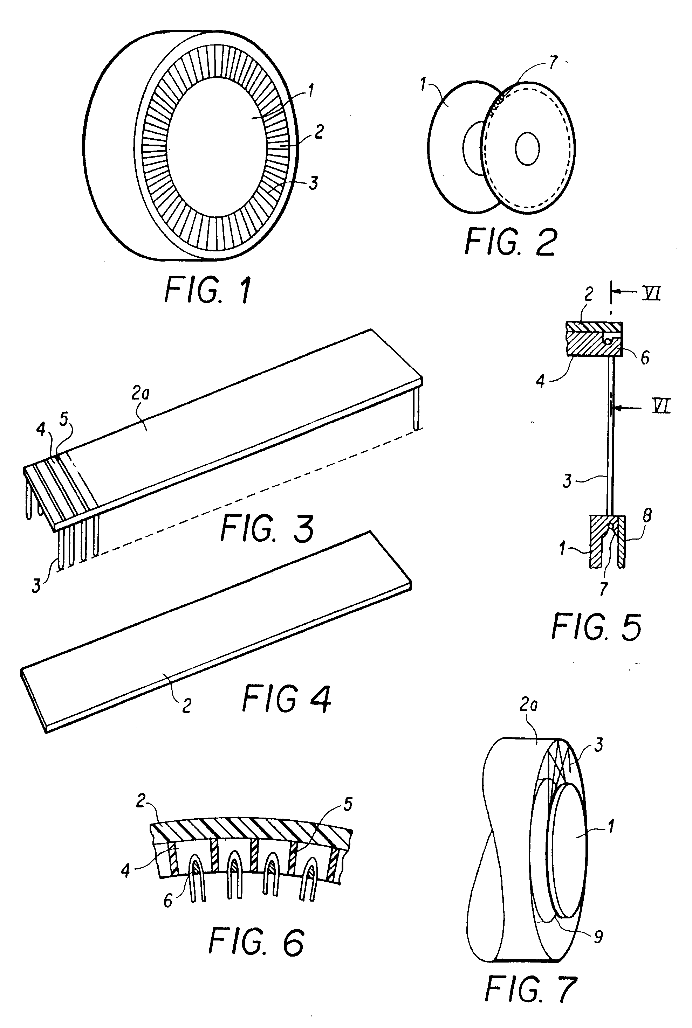

La fig. 1 montre la roue assemblée, avec le moyeu 1 , la bande de surface 2, et les câbles 3 constituant les moyens de liaison entre le moyeu et la bande de roulement.

Dans l'exemple décrit la bande de surface et l'élément structural sont façonnés "à plat", comme indiqué aux fig.3 et 4, puis mis sous forme circulaire par jonction des deux extrémités. Cette façon d'opérer permet une grande simplification de leur obtention, mais elle exige un soin particulier pour la jonction des bouts. La bande de roulement et l'élément structural peuvent être obtenus à partir de bandes continues, qu'on coupe à la longeur selon la dimension de roue désirée.

Il est cependant possible de préparer la bande de surface et l'élément structural directement sous la forme d'anneaux ce qui supprime le problème de la jonction, au prix d'une obtention un peu plus compliquée.

Comme on peut le voir aux figures 5 et 6, dans l'exemple choisi, l'élément structural est constitué d'une série de barrettes métalliques 4 disposées parllèlement les unes aux autres dans le sens axial, et liées entre elles par des masses de caoutchouc 5, qui assurent la souplesse. Les barrettes 4 et les masses de caoutchouc 5 constituent ensemble un e bande flexible 2a, destinée à doubler intérieurement la bande de surface 2 et à lui être liée pour constituer avec elle la bande de roulement de la roue.

Les barrettes 4, se terminent par une sorte de crochet 6 dirigé radialement vers l'extérieur, et qui maintient le câble 3. Sur le bord du moyeu 1, une série de crochets analogues 7, mais dirigés radialement vers l'intérieur de la roue, complètent le maintien des câbles 4. Un disque 8, monté sur le moyeu, empêche le câble de s'échapper du crochet] 7 en cas de rapprochement exagéré entre la bande de roulement et le moyeu. Les bords du crochet 7 sont inclinés pour permettre la mise en place facile du câble.

La bande de surface 2 est constituée d'une bande de caoutchouc, qui peut être renforcée d'une armature textile, non représentée.

La confection d'une roue comprend la confection de l'élément structure par collage à chaud des barrettes 4 avec les masses de caoutchouc 5, les câbles ayant été mis au préalable sur les crochets 6. Au cours de l'opération, les câbles 3 sont rendus solidaires des barrettes par le caoutchouc.

On notera qu'il peut s'agir soit d'anneaux de câbles fermés, en nombre égal à celui des crochets 6, soit d'un câble unique qui passe alternativement sur les crochets 6 et sur les crochets 7.

On joint ensuite les deux extrémités de l'élément structural,ce qui peut être fait en assemblant entre elles deux demi-barrettes 4, puis on fixe sur lui la bande de surface 2, dont les extrémités peuvent être jointes avant ou après mise en place.

Après quoi, on fait passer le câble sur les crochets 7, et on l'y immobilise à l'aide du disque 8.

Dans une variante, non représentée les crochets 7 ne sont pas portés directement par le moyeu mais par deux disques superposés coaxiaux au moyeu, de telle façon que chaque crochet portée par un disque soit intercalé entre deux crochets portés par l'autre disque. Les deux disques sont montés pour pivoter dans leur plan l'un par rapport à l'autre autour de leur axe commun. On conçoit que la rotation relative des disques rend les câbles obliques par rapport au rayon géométrique de la roue, ce qui permet, de façon très simple, de régler leur tension et, par conséquent, la "raideur" de la roue.

La figure 7 illustre, de façon schématique, un autre mode de réalisation de l'invention. Les multiples crochets 7 de la figure 5 sont supprimés et le moyeu 1 est conformé de façon à présenter une gorge périphérique 9.

Chacune des boucles du câble 3 visibles à la figure 3 à une longueur suffisante pour venir contourner le moyeu en passant dans la gorge 9, cette longueur étant par ailleurs calculée pour permettre le fonctionnement de la roue avec les performances désirées. Sur la figure 7, pour une meilleure compréhension, on n'a représenté que deux boucles complètes. En vue d'éviter la rotation relative du moyeu et des boucles de câble, celles-ci sont immobilisées, après mise en place, par exemple en les noyant dans une masse de caoutchouc. On appréciera l'extrême simplicité de la forme du moyeu et de la mise en place des câbles.

Un réglage de tension des câbles est possible par déplacement axial de la gorge 9.

## Revendications

1. Procédé de fabrication d'une roue déformable non-pneumatique du type comprenant un moyeu rigide (1), une bande de roulement déformable (2) dans le sens axial et de longueur périphérique sensiblement constante et des moyens de liaison (3) reliant ce moyeu à cette bande et constitués d'au moins un câble, ce procédé comportant la confection d'un sous-ensemble comprenant les moyens de liaison et la bande de roulement et l'assemblage de ce sous-ensemble avec le moyeu, caractérisée en ce qu'il comprend les étapes suivantes:

   a) confection d'un élément structural constitué du ou des dits câbles (3) constituant les moyens de liaison et d'une bande (2a) flexible dans le sens radial destinée à faire partie de la bande de roulement

   b) confection d'une bande de surface (2), destinée à faire partie de la bande de roulement, cette bande de surface étant flexible dans le sens radial et comportant une face extérieure conçue pour venir en contact avec le sol, la dite bande flexible et/ou la dite bande de surface étant de longueur sensiblement constante,

   c) assemblage de l'élément structural avec la bande de surface pour constituer la bande de roulement,

   d) assemblage du moyeu avec le dit câble ou les dits câbles, à l'aide de moyens d'accrochage (7,9) portés par le moyeu,

2. Procédé selon la revandication 1, caractérisé en ce qu'on assemble l'élément structural avec la bande de surface par collage et/ou vulcanisation, avec serrage entre deux surfaces concentriques et sensiblement cylindriques

3. Procédé selon la revendication 1 ou 2, caractérisé en ce qu'on confectionne l'élément structural sous une forme sensiblement cylindrique

4. Procédé selon la revendication 1 caractérisé en ce qu'on confectionne l'élément structural et/ou la bande de surface sous forme d'un élément plan dont on relie ensuite les deux extrémités

5. Procédé selon l'une des revendications 1 à 4, caractérisé en ce qu'on confectionne la bande flexible sous forme d'une série de barrettes (4) parallèles à l'axe de la roue, le ou les câbles contournant l'extrémité de chacune, ou d'une partie d'entre elles, ces barrettes étant reliées entre elles par enrobage dans du caoutchouc (5)

6. Procédé selon l'une des revendications 1 à 5 caractérisé en ce qu'on accroche les câbles sur des moyens d'accrochage multiples (7) répartis sur la périphérie du moyeu

7. Procédé selon la revendication 6, caractérisé en ce que les moyens d'accrochage sont portés par deux disques coaxiaux au moyeu et pouvant pivoter autour de l'axe, les moyens d'accrochage d'un à disque étant alternés avec ceux de l'autre disque, et en ce qu'on procède au réglage de la tension des câbles en agissant sur la position angulaire relative des disques

8. Procédé selon l'une des revendications 1 à 5, caractérisé en ce qu'on accroche les câbles en les faisant passer dans une gorge coaxiale du moyeu.

## Claims

1. A method for manufacturing a non-inflatable deformable wheel of the type comprising a rigid hub (1), a radially deformable tread (2) of substantially constant peripheral length, and connecting means (3) connecting said hub to said tread and consisting of at least one cord, said method including the making of a subassembly comprising the connecting means and the tread and the assembling of this subassembly to the hub, characterized in that it comprises the following steps:

   (a) fabricating a structural part constituted essentially of: said cord or cords (3) which forms the connecting means and a flexible band (2a) for a part of the tread,

   (b) fabricating a one-piece outside band (2) for another part of the tread, this outside band being radially flexible and having an outside face intended to be in contact with the ground, the said inside band and/or the said outside band having a substantially constant length,

   (c) assembling the said structural part with the said outside band to form the tread; and

(d) coupling the the said hub to the the said cord or cords with the aid of hooking means carried by the hub.

2. A method according to claim 1, wherein the said outside band is assembled with the said structural part by sticking and/or vulcanising, the said flexible band and the said outside band being pressed together between confronting concentric cylindrical surfaces.

3. A method according to claim 1 or 2, wherein the said structural part is fabricated in an approximately cylindrical shape.

4. A method according to claim 1, wherein the said structural part and/or the said outside band are manufactured as a flat shaped element whose opposite ends are therafter linked together.

5. A method according to one of the claims 1 to 4, wherein the said flexible band is fabricated under the form of a series of bars (4) parallel to the wheel axis, the cord or cords being set around the ends of at least a part of the said bars, and the said bars being linked to each other by imbedment in rubber(5).

6. A method according to one of the claim 1 to 5, wherein the said cord or cords are fastened on a plurality of hooking means (7) distributed on the hub periphery.

7. A method according to claim 6, wherein the hooking means are carried by two discs which are coaxial to the hub and can rotate around the axis, the hooking means of one disc being alternate with those of the other disc, and the tension of the cords is set by acting on the relative angular situation of the discs.

8. A method according to one of the claims 1 to 5, wherein the cords are hooked by running in a co-axial groove of the hub.

**Patentansprüche**

1. Verfahren zur Erzengung eines verformbares nicht gasgefülltes Rad, des Typs das eine starre Nabe (1), ein radial verformbares aber von wesentlich beständiger Umkreislänge Rollenband und Verbindungsmittel (3) für die Verbindung der Nabe mit dem Rollenband, umfasst, wobei die Verbindungmittel von mindenstens ein Kabel gebildet sind, und das Verfahren die Einstellung eines Bauteil, das die Verbindungsmittel und den Rollenband umfasst, und die Vereinigung dieses Banueil mit der Nabe enthalt, dadurch gekennzeichnet, dass es die folgende Stufe enthalt:

a) Einstellung eines Strukturelement mit dem mindenstens ein Kabel (3), das die Verbindungsmittel bildet, und einem radial biegsam Band (2a), das ein Teil des Rollenbands werden soll,

b) Einstellung eines Oberflächeband (2), die ein Teil des rollenbands werden soll, wobei diese Oberflächeband radial biegsam ist und eine zum kontact mit den Boden bestimmt aüssere Seite hat, wobei der radial biesam Band und der Oberflächeband von wesentlich beständiger Länge sind,

c) Zusammenfügung des Bauelement mit den Oberflächeband um den Rollenband zu erzeugen

d) Zusammenfügung des Nabes mit den mindenstens ein kabel, mit Hilfe von die durch der Nabe getragen Ankerungsmitteln (7,9).

2. Verfahren nach ansprüch 1, dadurch gekennzeichnet, dass das Strukturelement mit den Oberflächenband durch Klebung and/oder Vulkanisierung zusammengefügt wird.

3. Verfahren nach ansprüch 1 oder 2, dadurch gekennzeichnet, dass das Strukturelement wesentlich kreisformig eingestellellt wird.

4. Verfahren nach ansprüch 1, dadurch gekennzeichnet, dass das Strukturelement und/oder der Oberflächeband als ein eben element deren beide Ende danach miteinander verbunden werden.

5. Verfahren nach eine der Ansprüche 1 bis 4, dadurch gekennzeichnet, dass der biegsam Band als eine Reihe von parallel zum Achse der Rad Staben (4) eingestellt ist, wobei der Kabel (oder die Kabeln) jeweils um das End diesen Staber umlauft, und die Staben durch Umhüllen in Gummi (5) miteinander verbunden sind.

6. Verfahren nach eine der Ansprüche 1 bis 5, dadurch gekennzeichnet, dass die Kabeln auf vielfachen auf den Umfang der Nabe verteilten Ankerungsmitteln (7) befestigt sind.

7. Verfahren nach Ansprüch 6, dadurch gekennzeichnet, dass die Ankerungsmittel auf zwei koaxial mit die Nabe und um die Achse drehbar Scheibe getragen sind, wobei die Ankerungsmittel einer Scheibe abwechselnd mit diese der zweite Scheibe angeordnet sind, und dass die Spannung der Kabeln durch Handeln der bezuglich Winkel der Scheibe geregelt wird.

8. Verfahren nach eine der Ansprüche 1 bis 5, dadurch gekennzeichnet, dass die Kabeln dadurch befetigt sind, dass sie in eine koaxial Rinne der Nabe durchgehen.

FIG. 1

FIG. 2

FIG. 3

FIG 4

FIG. 5

FIG. 6

FIG. 7